(19) Europäisches Patentamt
European Patent Office
Office européen des brevets

(11) **EP 1 139 539 B1**

(12) **EUROPEAN PATENT SPECIFICATION**

(45) Date of publication and mention
of the grant of the patent:
**25.04.2007 Bulletin 2007/17**

(51) Int Cl.:
**G01R 31/08** *(2006.01)* **H02H 3/40** *(2006.01)*

(21) Application number: **01660057.9**

(22) Date of filing: **27.03.2001**

(54) **Method for determining the electrical insulation state of the sending end of an electric network**

Verfahren zur Bestimmung eines elektrischen Isolierungszustandes auf der Sendeseite eines elektrischen Netzwerks

Procédé pour la détermination de l'état d'isolation électrique du coté réception d'un réseau électrique

(84) Designated Contracting States:
**DE FR GB**

(30) Priority: **27.03.2000 FI 20000705**

(43) Date of publication of application:
**04.10.2001 Bulletin 2001/40**

(73) Proprietor: **ABB Oy**
**00380 Helsinki (FI)**

(72) Inventor: **Nikander, Ari**
**33820 Tampere (FI)**

(74) Representative: **Lipsanen, Jari Seppo Einari et al**
**Seppo Laine Oy,**
**Itämerenkatu 3 B**
**00180 Helsinki (FI)**

(56) References cited:
**WO-A-98/20356**

• XIA Y Q ET AL: "HIGH-RESISTANCE FAULTS ON A MULTI-TERMINAL LINE:-ANALYSIS, SIMULATED STUDIES AND AN ADAPTIVE DISTANCE RELAYING SCHEME" IEEE TRANSACTIONS ON POWER DELIVERY, IEEE INC. NEW YORK, US, vol. 9, no. 1, January 1994 (1994-01), pages 492-500, XP000465655 ISSN: 0885-8977

• NIKANDER A ET AL: "Methods for earth fault identification and distance estimation in a compensated medium voltage distribution network" ENERGY MANAGEMENT AND POWER DELIVERY, 1998. PROCEEDINGS OF EMPD '98. 1998 INTERNATIONAL CONFERENCE ON SINGAPORE 3-5 MARCH 1998, NEW YORK, NY, USA,IEEE, US, vol. 2, 3 March 1998 (1998-03-03), pages 595-600, XP010293689 ISBN: 0-7803-4495-2

**Description**

The invention concerns a method in accordance with Claim 1 for determining the electrical insulation status of a sending end or branch in an electric network.

Thus, the invention relates to a monitoring method at substation level based on monitoring the insulation status of an electric network, e.g. a medium-voltage network, for a numeric multi-function relay.

Conventional methods strive to detect high-resistance ground faults by monitoring the absolute value of the zero-sequence voltage of an electric power system and the changes occurring therein. When the zero-sequence voltage exceeds a threshold value, an alarm is given. This type of method does not provide any information on the location of the fault in the network.

WO 98/20356 A discloses a method for the detection and location of a high-resistance ground fault. The disclosed fault detection technique is mainly based on the following method: firstly, the line-to-neutral voltages of the network with their phase angles are measured at the distribution substation, whereafter the zero-sequence voltage ($\underline{U}_0$) of the network is computed as a vector sum of the measured line-to-neutral voltages, the network zero-sequence impedance ($\underline{Z}_0$) is computed, the zero-sequence voltage ($\underline{U}_0$) is compared to the line-to-neutral voltages ($\underline{U}_v$) and the total zero-sequence impedance ($\underline{Z}_0$) of the network. The variables thus obtained are then utilized for computing the fault impedances ($\underline{Z}_f$) for each phase and the phase with the largest real part of the fault impedance ($\underline{Z}_f$) is selected as the faulted phase. The method measures a 10-minute average of the zero-sequence voltage and the variations thereof. Thus, the method remains insensitive to rapid alterations in the zero-sequence voltage.

EP-A-1 018 027 describes a method for locating a high-resistance ground fault of an electric distribution network on the basis of current measurements. The method is based on computing measured changes in the zero-sequence voltage and line zero current with regard to some longer-term average. The effect of the current passing through the zero-sequence impedance during an operative status of the line is subtracted from the changes in zero current thus determined. Based on the compensated current changes, a section is selected as the faulty line section where this absolute value of the current changes is the greatest and in addition exceeds a predetermined threshold.

US Patent Publication No. 4,729,052 discloses a method wherein the occurrence of a ground fault is detected by changing the neutral point grounding impedance of the network and then measuring the effect of the change on the neutral point voltage. This method is suitable for use in resonant-ground systems only.

WO Patent Publication No. 9,627,138 describes a method for detecting a single-phase ground fault in a three-phase network with a neutral point grounded via the ground fault arc-suppression reactor. The method presupposes real-time information on the line-to-ground admittance of the sending end as well as the unsymmetrical admittance reflecting the unsymmetry of the sending end. The determination of the fault admittance used for fault detection presupposes the measurement of three pairs of measurement values ($U_0$, $I_0$). The method is highly complicated and is only suited for implementation in fully compensated networks provided with grounding arc-suppression reactors having remote-controlled tuning automatics. In order to achieve a sufficient zero-sequence voltage, the network must also exhibit sufficient unsymmetry. Most networks fail to meet these requirements.

The prior art techniques are hampered by several drawbacks.

The sensitivity of the prior-art methods is inadequate, wherefore they cannot be regarded as insulation state monitoring methods capable of being used to monitor each one of the network sending ends. The most advanced computation methods require real-time information on the electrical length of the sending end and are susceptible to ground admittance faults. Due to the inadequate accuracy of the measuring devices commonly used at substations, the computational determination of the real part of the line-to-ground admittance, i.e. the physically correct value of the ground conductance is not possible. Furthermore, the ground conductance value is likely to vary e.g. with the weather conditions.

A fault detection method based on monitoring the RMS value of the zero-sequence voltage of the network provides no information on the location of the fault in the network. A high-resistance ground fault of great magnitude may give rise to a greater change in the phase angle of the zero-sequence voltage than in the absolute value, which information cannot be exploited by a method based on monitoring the zero-sequence voltage. Weather phenomena (e.g. snowfall) and network connection measures or the tuning of the grounding reactor of a compensated network give rise to changes in the zero-sequence voltage of the network. Such changes are difficult to distinguish from changes in the zero-sequence voltage caused by a high-resistance ground fault of great magnitude, wherefore the sensitivity of the method in question is deficient.

Prior-art methods for detecting high-resistance ground faults fail to make network monitoring possible per each sending end because the direction of the fault has to be determined after the detection of the fault by the aid of changes in the zero currents at the sending ends. The method described in WO 98/20356 A only allows leak resistance monitoring generally with regard to all the phases of the network. The computation of the network zero-sequence impedance in said method is based on the zero-sequence susceptance values reported by the line conductor manufacturers that often involve notable inaccuracy. The line-to-ground capacitances of the network can be measured by means of ground fault tests, but such results are valid only for the connection status prevailing during the tests. Furthermore, the network zero-sequence impedance must be computed within a higher-level system, whereupon the information must be submitted to a protective relay. The benefits of the method include detection of the faulted phase and relatively good sensitivity.

According to the method disclosed in WO 98/20356 A, the zero-sequence impedances of the sending ends are only computed in conjunction with ground faults of small fault resistance values. A fault is of small fault resistance value if its fault resistance $R_F < 5$ k$\Omega$ or if the zero-sequence voltage exceeds 50 % of the normal state line-to-neutral voltage. The method will malfunction if the zero-sequence impedance of the sending end has changed due to a connection measure and if no real-time zero-sequence impedance is available when the fault occurs. The method is sensitive to an error in the zero-sequence impedance. In a fully compensated network where the ground fault current is almost fully compensated, the change in zero-sequence current at the sending end caused by a ground fault is directed parallel to the changes in the zero-sequence currents of sound sending ends and is roughly equal to the electric length of the faulted sending end in magnitude. Hereby a compensated current change computed by the method in question is close to zero even in the case of a faulted sending end. The function of the method may therefore be uncertain in a fully compensated network.

It is an aim of the present invention to overcome the drawbacks of the above-described prior art and to achieve an entirely novel type of method for determining the electrical insulation status of a sending end or a branch of an electric network.

The invention is based on locating the faulted phase and the faulted sending end on the basis of the change caused by the fault situation or an artificial special situation.

The method according to the invention involves the determination of a faulted phase by means of measured line-to-neutral voltage and zero-sequence voltage values $\Delta \underline{U}_0 = \underline{U}_{0M} - \underline{U}_0{}'$, whereafter the fault resistance $R_F$ of the faulted phase is computed for each sending end from the Equation $R_F = \dfrac{\left|\underline{U}_{vF}\right| \sin \varphi_{U_{vF}}}{\left|\Delta \underline{I}_0\right| \sin \varphi_{I_0} + B_0 \left|\Delta \underline{U}_0\right|}$ wherein

$\underline{U}_{vF}$ = voltage between faulted phase and ground

$\varphi_{U_{vF}}$ = phase angle between voltage vector $\underline{U}_{vF}$ of the faulted phase and the vector $\Delta \underline{U}_0$

$\Delta \underline{I}_0$ = change in the sum current of the sending end as a result of a change in the zero-sequence voltage

$\varphi_{I_0}$ = phase angle between the vectors $\Delta \underline{I}_0$ and $\Delta \underline{U}_0$

$B_0$ = total line-to-ground susceptance of the three phases of the sending end (imaginary part of the line-to-ground admittance),

whereby a sending end is interpreted as being faulted if the fault resistance thereof is smaller than a set threshold value ($R_F < R_{Fk}$), and in the case of a fault of small fault resistance the computed $R_F$ values of the sending ends are compared and the sending end is selected as being faulted that has the smallest fault resistance value.

In more detail the method of the invention is characterized by what is stated in the characterizing part of Claim 1.

The invention achieves considerable benefits.

A central benefit of the method according to the invention with regard to previously disclosed methods and publications has to do with the simplicity of its practical implementation and the possibility of integrating the method as part of other network automation. Implementing the method in practice does not require *a priori* knowledge of the electrotechnical data of the network components (i.e. network data). The method can be conceived as a black box whose input signals are the measured zero-sequence voltages, line-to-neutral voltages and sum currents, while the output comprises an indication of a high-resistance ground fault which is sent as a unilateral event signal to a higher-level automation system. The method can be implemented within a single compartmentalized cell terminal and the fault indication does not require any communication with other relays or information processing systems, which makes the method more robust and flexible than e.g. the method disclosed in WO 98/20356 A. Furthermore, a secondary relay/ substation (REC) implemented according to the invention can be installed at a field disconnector station of the network. Since no supplementary initial information or communication with the higher-level relays or information systems is required in this case either, the practical implementation of the present method is substantially more straightforward than that of the method described in the cited WO 98/20356 A.

The benefit provided by the invention over the methods according to US Patent Publication No. 4,729,052 and the cited reference [Lei97]: Leitloff V. et al.: "Detection of resistive single-phase earth faults in a compensated power distribution system", ETEP '97, vol. 7, no. 1, Jan. 1997, pp. 65-73 lies in the fact that the installation of any additional components, which would directly become part of the faulted current circuit, at the neutral point of the network is not required. Another benefit lies in the fact that even faults in isolated-neutral networks and networks grounded via resistance can be detected and located.

A central benefit of the method has to do with its continuous operation. E.g. the so called DDA method described in the cited publication [Lei97] relates mainly to monitoring based on discrete measurements. The significant difference of the invention with regard to the DDA method described in the cited publication [Lei97] lies in that the present methods allows the avoidance of the uncertainty and inaccuracy related to the line-to-ground conductance at the sending end. This permits a more accurate determination of the fault resistance and thus increases the sensitivity of the indication. In practice, the determination of physical line-to-ground conductance is impossible with the measuring instruments at substations. As a computation algorithm, the method of the invention differs entirely from the methods of the cited reference [Lei97]. The method according to the invention responds to changes in the monitoring of the insulation status of an electric network that last longer than the length of a network cycle, unlike e.g. the method disclosed in WO 98/20356 A which measures a several-minute average of the zero-sequence voltage and the changes occurring therein.

The determination of the line-to-ground admittances at the sending ends by measurements increases the accuracy of fault current computations with regard to values computed on the basis of network data and allows the relay to have up-to-date information on the electrical length of the sending end. The method according to the invention enables fault indication even in cases where the fault occurs soon after a change in the sending end connection status. In the determination of the electrical length of the sending end, changes in the zero-sequence voltage inherently occurring in the network are exploited. The line-to-ground susceptance of a sending end is computed in connection with ground faults of small fault resistance. The computing systems require no tuning of the compensation. If the network is compensated and provided with automatic arc-suppression reactor tuning equipment, even the change in the zero-sequence voltage caused by the tuning of the arc-suppression reactor can be used for computing the line-to-ground susceptances of the sending ends.

The invention enables continuous monitoring of the electrical insulation status of the different sending ends of a network. The methods detects not only the existence of a fault and a faulted sending end but also indicates the faulted phase and the magnitude of the fault resistance.

One further advantage which may be appreciated in the invention is that it can be implemented without any new equipment constructions, measurements or measuring sensors, but that instead its algorithms are runnable on software that is programmed on existing numerical multi-function relays using current, existing measuring devices.

As the line-to-ground admittance computation at a sending end is based on a change in the zero-sequence current and the zero-sequence voltage instead of the absolute values of these variables, the error factor caused by the capacitance unsymmetry of the sending end is eliminated. During an operative network status or during a high-resistance ground fault of great magnitude and at low values of the zero-sequence voltage, the current component caused by the capacitance unsymmetry will usually play an important role in the total sum current in the case of an overhead sending end.

The values measured for the zero-sequence voltage and sum current and the changes occurring therein are small compared to the nominal values of the measuring equipment. In the method according to the invention, a change in the variable is used instead of a discrete measurement value. Hereby a significant part of the measurement error is eliminated because an error in the same direction is at hand both in the measurement carried out prior to the change and in the measurement performed after the change. This is a significant benefit of the invention.

The monitoring of the insulation status of the different phases of the sending ends of a medium-voltage network (the detection of high-resistance ground faults) and the determination of a faulted sending end is problematic due to the insignificant magnitude of the fault current. The most sensitive fault indicator directly measurable from the network in such fault instances is the zero-sequence voltage. However, fault detection based on a change in the RMS value of the zero-sequence voltage or the total line-to-ground leakage resistance of the network does not directly indicate the faulted sending end which must then be determined by different means. The methods disclosed in the invention may be used for independent monitoring of the electrical insulation status of each sending end.

A central benefit of the invention over prior-art methods is the continuous operation thereof. The method responds even to extremely rapid changes in the zero-sequence voltage ($\geq$ length of a network cycle). The methods will allow the detection of errors of very short duration and even passing ones. The protective relays of the sending ends have up-to-date information about the electrical length and insulation status of each sending end. The method requires no information transmission between the relay and the overlying automation systems or relays. Furthermore, the methods of the invention may even be used to prevent secondary faults due to a ground fault (e.g. double ground faults), because the faults can be detected before they impose any additional load on the healthy phases of the network.

The method according to the invention provides significantly greater sensitivity than before of detecting a reduced insulation status of one phase of an electric network sending end, i.e. greater fault resistances can be detected than previously. The existence of a fault can also be determined with greater reliability than before because the difference between the fault resistance values computed for a faulted and a sound sending end is much greater than that obtained by the DDA method of the cited reference [Lei97].

The method described is advantageous as a whole because it requires no new measurements or equipment. All that is needed is the programming of a new functional block or blocks on the relay.

In the following, the invention is examined in the light of exemplifying embodiments in accordance with the annexed Figures.

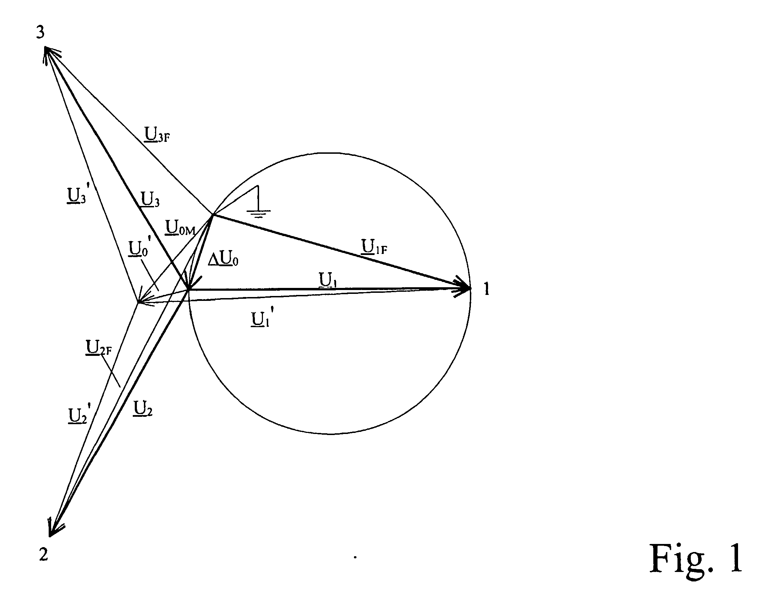

Figure 1 is a graphical representation in the form of vectors of the symmetrical line-to-neutral voltages of the network, the unsymmetrical line-to-neutral voltages during a sound status, the unsymmetrical line-to-neutral voltages during a fault incident as well as the zero-sequence voltages corresponding to a normal and a faulted network condition in a single-phase ground fault of an isolated-neutral network.

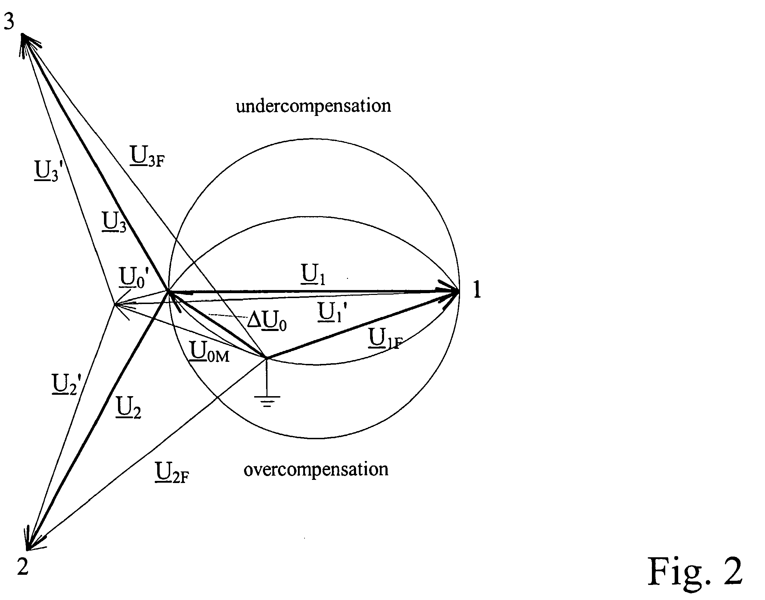

Figure 2 is a graphical representation in the form of vectors of symmetrical line-to-neutral voltages of the network, the unsymmetrical line-to-neutral voltages during a sound status, the unsymmetrical line-to-neutral voltages during a fault incident as well as the zero-sequence voltages corresponding to a normal and a faulted network condition in a single-phase ground fault of a resonant-ground network.

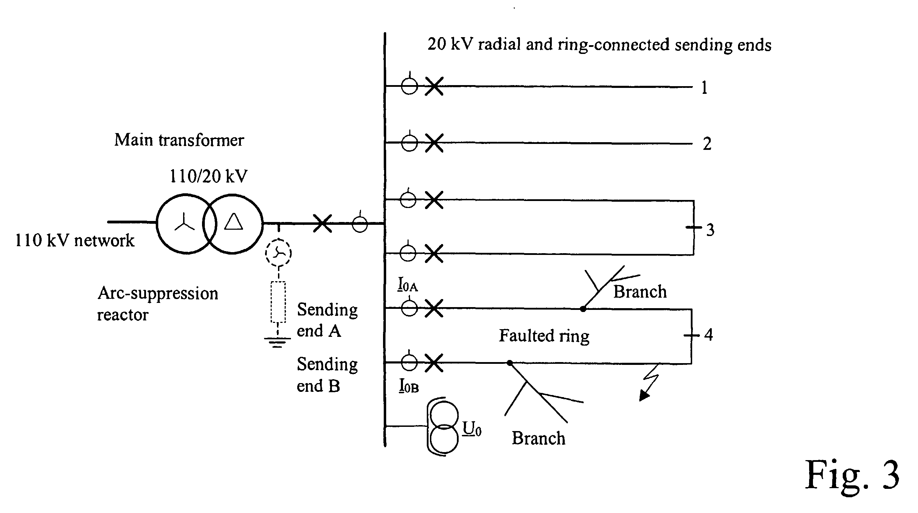

Figure 3 illustrates an exemplifying embodiment of a medium-voltage isolated-neutral or resonant-ground network, said network consisting of both radial and ring-connected sending ends. The ring-connected sending ends are supplied from one and the same electric station, e.g. a 110/20 kV station.

The line-to-ground admittance $\underline{Y}_{0i}$ of an electric network sending end may be computed as the quotient of the change in the zero-sequence current and the change in the zero-sequence voltage of the sending end. The real part of the line-to-ground admittance thus computed represents the conductance between the phases of the sending end and the ground, and the imaginary part represents the susceptance between the phases and the ground, consisting of line-to-ground capacitances.

$$\underline{Y}_{0i} = \frac{1}{R_{0i}} + j\omega C_{0i} = G_{0i} + jB_{0i} = \frac{\Delta \underline{I}_{0i}}{\Delta \underline{U}_0} \qquad (1)$$

$R_{0i}$ = leakage resistance represented by three phases
$G_{0i}$ = line-to-ground conductance represented by three phases
$C_{0i}$ = line-to-ground capacitance represented by three phases
$B_{0i}$ = line-to-ground susceptance represented by three phases
$\omega$ = angular frequency

Usually the physical leakage resistance of a sound line connected to a sending end is in the range of megaohms, and thus, the magnitude of the line-to-ground conductance is in the range of $1/\Omega$ within the decade $10^{-6}$. The line-to-ground conductance values computed by the aid of Equation 1 from results obtained from field measurements are often in the same decade as the corresponding line-to-ground susceptance of the sending end. This cannot be physically accurate but instead, the line-to-ground susceptance may be regarded as of virtual nature and mainly due to measurement inaccuracy. The measuring accuracy of the measuring devices at substations and the sampling frequency of numerical relays are typically not adequate for determining the physically correct line-to-ground conductance of a line connected to a sending end or of the entire network by means of the method. More sensitive detection is achieved in the monitoring of the electrical insulation status of an electric network sending end if the line leakage resistance at normal state of the sending end is ignored altogether and only the line-to-ground susceptance and the reactive component of the sum current are used for computing the fault resistance. This enables the detection of fault resistances of significantly greater magnitude than has been possible by previously known methods. According to field measurements performed and the experience gathered therefrom, the line-to-ground susceptance computed from Eq. 1 corresponds to the electrical length of the sending end with great accuracy.

The zero-sequence susceptances $B_0$ of the sending ends are always updated in connection with ground faults of small fault resistance. If need be, even $B_0$ values computed from network data may be used. The method of the invention is not sensitive to an error in the zero-sequence susceptance of a sending end because the value of $B_0$ is not required at all for determining a faulted phase and even the order of magnitude of the fault resistance indicates the existence of a fault.

In the following, a method for determining the electrical insulation status of an electric network sending end by means of fault resistance is described, in which method the fault resistance is computed per line connected to a sending end. As only the imaginary part of the line-to-ground admittance of the sending end during an operative status, i.e. the line-to-ground susceptance, is used in the computation, it is also necessary to separate the reactive component from the sum current of the sending end. The sum current of the sending end further contains a component caused by the unsymmetry of the line-to-ground capacitances. At the level of the entire network, the unsymmetry of the line-to-ground capacitances gives rise to a small neutral voltage in the network even under normal conditions. The effect of the unsymmetry of the line-to-ground capacitances must be eliminated both from the zero-sequence voltage and the sum currents of the sending ends. In this manner the computation is brought back to correspond to the symmetrical initial situation.

The computation starts with a change in the neutral voltage of the network. The change in the neutral voltage is computed from the following Equation 2. If the change in neutral voltage results from a ground fault, $\Delta \underline{U}_0$ denotes the neutral voltage caused by a ground fault (Figure 1), because the neutral voltage during an operative condition is subtracted from the measured neutral voltage during ground fault. This will eliminate the influence of the capacitance unsymmetry on the measured neutral voltage. As the absolute value of $\Delta \underline{U}_0$ exceeds the predetermined threshold value $U_{0k}$, the determination of the faulted phase and the computation of fault resistance is started at all sending ends. The vector $\Delta \underline{U}_0$ is also used as a reference vector in the computation.

$$\left| \Delta \underline{U}_0 \right| = \left| \underline{U}_{0M} - \underline{U}_0^{'} \right| \geq U_{0k} \qquad (2)$$

$\underline{U}_0^{'}$ = measured neutral voltage prior to change (normal network status)
$\underline{U}_{0M}$ = measured neutral voltage after change (faulted network status)

The fault resistance is computed for each sending end from the following Equation which works both for an isolated-neutral network and a resonant-ground network. All underlined variables are vectors. The vectors used in the computation have been determined by simultaneous measurements. The computation of the fault resistance takes place per each phase by the aid of the voltage of the faulted phase.

$$R_{Fi} = \frac{\left| \underline{U}_{vF} \right| \sin \varphi_{U_{vF}}}{\left| \Delta \underline{I}_{0i} \right| \sin \varphi_{I_{0i}} + B_{0i} \left| \Delta \underline{U}_0 \right|} \qquad (3)$$

$$\Delta \underline{I}_{0i} = \underline{I}_{02i} - \underline{I}_{01i} \qquad (4)$$

$R_{Fi}$ = fault resistance at sending end i
$\underline{U}_{vF}$ = = voltage between faulted phase and ground
$\varphi_{U_{vF}}$ = phase angle between voltage vector $\underline{U}_{vF}$ of faulted phase and vector $\Delta \underline{U}_0$
$\Delta \underline{I}_{0i}$ = change in the sum current at sending end i
$\underline{I}_{01i}$ = sum current at sending end i prior to change in neutral voltage
$\underline{I}_{02i}$ = sum current at sending end i after change in neutral current
$\varphi_{I_{0i}}$ = phase angle between vectors $\Delta \underline{I}_{0i}$ and $\Delta \underline{U}_0$
$B_{0i}$ = summed line-to-ground susceptance of the three phases at sending end i (imaginary part of line-to-ground admittance)

The method described can be repeated periodically at arbitrary later points in time in order to compute $R_F$ such that the sending end or ends can be monitored on a continuous basis. When the fault resistance $R_F$ is smaller than the set threshold value $R_{Fk}$, the sending end is interpreted as being faulted. $R_F$ may be determined at its shortest with intervals the length of a network cycle such that even temporary ground faults of short duration can be identified.

**Determination of the electrical insulation status of sending ends in the ring of an electric network**

A high-voltage electric power distribution network is usually constructed to have a ring-connected configuration in order to provide the possibility of resorting to emergency supply in a fault situation and to improve the reliability of the network. In the following, the indication of a ground fault at two sending ends supplied from the same electric station and connected in a ring is examined (Figure 3).
In the case of a ring-connected sending end, ground faults of considerable resistance magnitude can be indicated in accordance with the same algorithm (Eq. 3) as is applied in the case of a radial sending end. The only difference lies in using the sum of the zero-sequence currents of the ring-connected sending ends instead of the zero-sequence current of a radial sending end. The fault resistance is computed from Eq. 5 while the sending ends A and B are connected in a ring using the denotations of Figure 3. The method is functional both in an isolated-neutral network and a resonant-ground network. The term "total sum current of ring-connected sending ends" is used to denote the sum of the zero-sequence currents of sending ends A and B.

$$R_{Fi} = \frac{|\underline{U}_{vF}| \sin \varphi_{U_{vF}}}{|\Delta \underline{I}_{0AB}| \sin \varphi_{I_{0AB}} + B_{0r} |\Delta \underline{U}_0|} \tag{5}$$

$$\Delta \underline{U}_0 = \underline{U}_{0M} - \underline{U}_0' \tag{6}$$

$$\Delta \underline{I}_{0AB} = (\underline{I}_{0A2} + \underline{I}_{0B2}) - (\underline{I}_{0A1} + \underline{I}_{0B1}) \tag{7}$$

$$\varphi_{U_0} = \arg(\underline{U}_{0M} - \underline{U}_0'), \quad \varphi_{I_{0AB}} = \arg(\Delta \underline{I}_{0AB}) - \varphi_{U_0} \tag{8}$$

$R_{Fi}$ = fault resistance at ring-connected sending end i
$\underline{U}_0'$ = neutral voltage of network prior to change
$\underline{U}_{0M}$ = neutral voltage of network after change
$\underline{I}_{0A1}$ = sum current of ring-connected sending end A prior to change in neutral voltage
$\underline{I}_{0B1}$ = sum current of ring-connected sending end B prior to change in neutral voltage
$\underline{I}_{0A2}$ = sum current of ring-connected sending end A after change in neutral current
$\underline{I}_{0B2}$ = sum current of ring-connected sending end B after change in neutral voltage
$\varphi_{U_0}$ = phase angle of vector $\Delta \underline{U}_0$
$\varphi_{I_{0AB}}$ = phase angle between vectors $\Delta I_{0AB}$ and $\Delta \underline{U}_0$
$B_{0r}$ = summed line-to-ground susceptance of a ring-connected sending end (Figure 3: A+B) (sum of all three phases).

Fault resistance computation is performed per phase by the aid of the voltage of the faulted phase. The ring connection does not influence the inference of the faulted phase which is carried out by means of the line-to-neutral voltages and the neutral voltage in the manner explained below.

**Determination of a faulted phase in an isolated-neutral network**

When the absolute value of $\Delta \underline{U}_0$ exceeds a set threshold, the first task is to determine the faulted phase. The inference of a faulted phase is performed following a slightly different procedure in an isolated-neutral network and a resonant-ground network. The inference of a faulted phase is as such a sensitive method of ground fault indication.
Figure 1 depicts in the form of vectors the symmetrical line-to-neutral voltages of an isolated-neutral network, the unsymmetrical line-to-neutral voltages in a sound state, the unsymmetrical line-to-neutral voltages during a ground fault, the neutral voltage measured in a sound state, the neutral voltage measured during a ground fault, and the neutral voltage during a ground fault corresponding to the symmetrical initial status. In an isolated-neutral network the neutral voltage and the voltage during a faulted phase will draw a semi-circular arc as a function of the fault resistance. This means that during a ground fault the voltage of a faulted phase is 90° ahead of the neutral voltage ($\Delta \underline{U}_0$) corresponding to the symmetrical initial status independent of the magnitude of the fault resistance. In practice, a small neutral voltage occurs in the network even under normal conditions due to the unsymmetry of the line-to-ground capacitances, whereby even the line-to-neutral voltages under healthy conditions are unsymmetrical. When the vector of the neutral voltage measured prior to the fault is subtracted from the vector of the neutral voltage measured during the fault, a neutral voltage corresponding to the symmetrical initial status results. The phase is interpreted as being faulted whose line-to-neutral voltage is ahead of the reference vector $\Delta \underline{U}_0$ by approximately 90°. In practice, due to measurement inaccuracies, the value may be a few degrees smaller or greater than the threshold value. Hereby the angles of the voltage phasors of the phases with regard to the neutral voltage are as follows, if phase 1 is assumed to be faulted. The Equations are computed according to the ideal status (90°).

$$\varphi_{U_{1F}} = 90°, \qquad \varphi_{U_{2F}} = \varphi_{U_{1F}} - 120° = -30°, \qquad \varphi_{U_{3F}} = \varphi_{U_{1F}} - 240° = -150° \tag{9}$$

The following denotations are used in Figure 1:

1,2,3 = phase subindexes
$\underline{U}_0{}'$ = neutral voltage during sound status
$\underline{U}_{0M}$ = neutral voltage measured during ground fault
$\Delta\underline{U}_0$ = neutral voltage during ground fault corresponding to symmetrical initial status
$\underline{U}_1, \underline{U}_2, \underline{U}_3$ = symmetrical line-to-neutral voltages
$\underline{U}_1{}', \underline{U}_2{}', \underline{U}_3{}'$ = unsymmetrical line-to-ground voltages during sound status
$\underline{U}_{1F}, \underline{U}_{2F}, \underline{U}_{3F}$ = unsymmetrical line-to-ground voltages during ground fault

The voltage between a faulted phase and ground during a ground fault is independent of the capacitance unsymmetry of the network and of the zero-sequence voltage in an operative state (Figure 1). The zero-sequence voltage $\Delta\underline{U}_0$ corresponding to a sound initial status may be computed from the following Equation.

$$\Delta\underline{U}_0 = \underline{U}_{0M} - \underline{U}_0{}' \qquad (10)$$

In determining a faulted phase and in computing the fault resistance, a zero-sequence voltage corresponding to a symmetrical initial status is used, because only then is the angle clause (9) in force. The phasors of the zero-sequence voltage in an operative state and the zero-sequence voltage during a fault are known as measurement values. In an isolated-neutral network the numerator of Equation 3 is positive in the case of a faulted phase and negative in the case of sound phases. This may be used to check a faulted phase.

Alternatively, the $\Delta\underline{U}_0$ corresponding to a sound initial status may also be determined in a different manner. The line-to-line voltages of the network, which do not change as a consequence of a ground fault, are measured continuously. The line-to-line voltages can be used to determine the symmetrical line-to-neutral voltages $\underline{U}_1, \underline{U}_2$ and $\underline{U}_3$. The line-to-line voltages should be roughly equal both in an operative state and during a ground fault. In practice, the absolute values of the line-to-line voltages differ from each other slightly due to measurement inaccuracy. The voltage may also contain some negative component. A line-to-neutral voltage computed from the average value of three line-to-line voltages may, for instance, be used as the absolute value of the line-to-neutral voltage.

$$\left|\underline{U}_1\right| = \left|\underline{U}_2\right| = \left|\underline{U}_3\right| = \frac{\left|\underline{U}_{12}\right| + \left|\underline{U}_{13}\right| + \left|\underline{U}_{23}\right|}{3\sqrt{3}} \qquad (11)$$

The value of $|\underline{U}_1|$ computed from Equation 11 is set as the absolute values of the symmetrical line-to-neutral voltages $\underline{U}_1, \underline{U}_2, \underline{U}_3$ (Figure 1), and the phase angles are set to correspond to a symmetrical situation. In an operative state, the angle of $\underline{U}_1$ is the phase angle of the vector $(\underline{U}_1{}' - \underline{U}_0{}')$ or during a ground fault, the angle of the vector $(\underline{U}_{1F} - (\underline{U}_{0M} - \underline{U}_0{}'))$. The angles of the line-to-neutral voltages are given their ideal values, e.g. $\arg(\underline{U}_1) = 30°$, $\arg(\underline{U}_2) = -90°$, $\arg(\underline{U}_3) = 150°$. When the absolute values and phase angles of the line-to-neutral voltages are determined in this manner, ideally symmetrical voltages can be utilized in the computations. Hereby the zero-sequence voltage $\Delta\underline{U}_0$ corresponding to a symmetrical initial status can be determined directly by means of the measured voltage of the faulted phase and the symmetrical line-to-neutral voltage computed in the above-described manner (Figure 1, Eq. 12).

$$\underline{U}_0 = \underline{U}_{1F} - \underline{U}_1 = \underline{U}_{2F} - \underline{U}_2 = \underline{U}_{3F} - \underline{U}_3 \qquad (12)$$

During a high-resistance ground fault of great magnitude the line-to-neutral voltages $\underline{U}_{1F}, \underline{U}_{2F}$ and $\underline{U}_{3F}$ are close to the values in an operative state, wherefore good measurement accuracy is achieved as regards them. If the zero-sequence voltage $\Delta\underline{U}_0$ is computed as a change by means of Eq. 10, the greatest measurement inaccuracy concerns the value computed for $\Delta\underline{U}_0$. This is because the zero-sequence voltage values measured are usually small.

The inference of a faulted phase by the above-described method is already as such a sensitive method of fault indication. The zero-sequence voltage in an operative state $\underline{U}_0{}'$ generated by the capacitance unsymmetry of the network may have any direction. If the network zero-sequence voltage changes due to a change in line length or unsymmetry, it may accidentally happen that some line-to-neutral voltage is ahead of the vector $\Delta\underline{U}_0$ representing a change in the zero-sequence voltage by 90°. The probability of such a situation is small but the inference of a faulted phase is by itself not a fully adequate condition for the existence of a fault. The magnitude of the fault resistance will in such a case reveal that none of the sending ends is faulted. The inference of a faulted phase is a prerequisite for the computation of the fault resistance.

**Determination of a faulted phase in a resonant-ground network**

Figure 2 depicts the symmetrical line-to-neutral voltages of a resonant-ground network, the unsymmetrical line-to-neutral voltages in a sound state, the unsymmetrical line-to-neutral voltages during a ground fault, the zero-sequence voltage in an operative state, a zero-sequence voltage corresponding to the symmetrical initial status caused by a ground fault, and the zero-sequence voltage measured during a ground fault. The symbols used for the voltage correspond to those used in Figure 1. The zero-sequence voltage and the voltage in a faulted state draw an arc as a function of the fault resistance, the radius of which is dependent on the degree of compensation in the network. The upper semi-circular arc corresponds to an isolated-neutral situation and the lower semi-circular arc to infinite overcompensation.

In a resonant-ground network the inference of a faulted phase is more complicated to implement than in an isolated-neutral network. The phase angle $\varphi_{U_{vF}}$ of the voltage of a faulted phase with regard to the zero-sequence voltage $\Delta\underline{U}_0$ may vary between 90˚ and 180˚ in an undercompensated network and between -90˚ and -180˚ in an overcompensated network. At a low degree of compensation the phase angle $\varphi_{U_{vF}}$ approaches 90˚ and in a generously overcompensated situation -90˚. When the grounding arc-suppression reactor is tuned very close to resonance, the angle $\varphi_{U_{vF}}$ approaches 180˚. The inference of a faulted phase by the above-described method is not as effective a method of fault indication as the inference of a faulted phase of an isolated-neutral network. Changes in the zero-sequence voltage caused by reasons other than a ground fault are more likely to lead to a situation where the phase angle of the voltage of one of the phases with regard to the zero-sequence voltage $\Delta\underline{U}_0$ is within a range which will lead to the phase being interpreted as faulted. Hereby a computed fault resistance will reveal that the sending end is operative. Thus, the method indicates the phase which may be faulted. By means of the angle $\varphi_{U_{vF}}$ it is also possible to conclude whether the network is under- over overcompensated. If a ground fault is detected in the network, the angle $\varphi_{U_{vF}}$ will also render possible the determination of the degree of compensation of the network. This is of particular advantage when there is fixed (not variable) compensation in the network, either at an electric station or in a distributed manner in the network, and there is no measurement data on the zero-sequence currents of the reactors. In such a situation, it is difficult to accurately determine the degree of compensation in the network by any other means.

When the network is tuned to resonance the zero-sequence voltage ($\Delta\underline{U}_0$) vector is directed opposite to the symmetrical line-to-neutral voltage of the faulted phase. In a fully compensated symmetrical system the voltage of the faulted phase is always the lowest, because the residual current is then fully resistive. Even this can be used as confirmation in the determination of a faulted phase if the network can be tuned to resonance.

**Summary**

According to field tests carried out, the method disclosed herein will achieve a minimum detection sensitivity of 190 kΩ. The method defined in Equations 3 and 5 based on fault resistance computation is operational in both an isolated-neutral network and a resonant-ground network. The computation according to the method can be performed both in the case of radial sending ends and in the case of ring-connected sending ends. Each sending end examined requires multi-function relays (cell terminals). As measurement data, one line-to-line voltage, the zero-sequence voltage, line-to-neutral voltages, and the sum currents of the sending ends are typically required. All these measurements are available at all electric stations.

The invention is naturally not restricted by the exemplifying embodiments provided but comprises instead all embodiments feasible within the scope of the following patent claims. The various methods can be used parallelly to achieve an indication of maximal reliability.

In the present disclosure, an underlined symbol (e.g. $\Delta\underline{U}_0$) denotes a vector. The vectors (phase angles and absolute values) used in the computation are determined by simultaneous measurements with the accuracy provided by practical measurement techniques.

**Claims**

1. A method for determining the electrical insulation status of a sending end or branch in an electric network, comprising

- computing the absolute value of a change in the zero-sequence voltage in the form of a vector in connection with a change in the state of the network, whereby $\underline{U}_0$' = measured zero-sequence voltage prior to change and $\underline{U}_{0M}$ = measured zero-sequence voltage after change,

- comparing the computed value $|\Delta \underline{U}_0|$ to a predetermined threshold value $|\Delta \underline{U}_0| \geq U_{0k}$, and
- if the change in the zero-sequence voltage exceeds the threshold, initiating the determination of the faulted phase,

**characterized by** the steps of

- determining which phase is faulted by the aid of measured line-to-neutral voltages and the zero-sequence voltage $\Delta \underline{U}_0 = \underline{U}_{0M} - \underline{U}_0$',

- computing the fault resistance $R_F$ of the faulted phase for each sending end from the Equation

$$R_F = \frac{\left|\underline{U}_{vF}\right| \sin \varphi_{U_{vF}}}{\left|\Delta \underline{I}_0\right| \sin \varphi_{I_0} + B_0 \left|\Delta \underline{U}_0\right|} \quad \text{wherein}$$

$\underline{U}_{vF}$ = voltage between faulted phase and ground
$\varphi_{U_{vF}}$ = phase angle between voltage vector $\underline{U}_{vF}$ of the faulted phase and the vector $\Delta \underline{U}_0$
$\Delta I_0$ = change in the sum current of the sending end resulting from a change in the zero-sequence voltage
$\varphi_{I_0}$ = phase angle between vectors $\Delta I_0$ and $\Delta \underline{U}_0$
$B_0$ = summed line-to-ground susceptance (imaginary part of the line-to-ground admittance) of the three phases of the sending end,

- interpreting as faulted the sending end whose fault resistance ($R_F$) is smaller ($R_F < R_{Fk}$) than a set threshold ($R_{Fk}$), and
- in the case of a fault of small fault resistance, comparing the values computed for $R_F$ at the sending ends and selecting the sending end with the smallest fault resistance as being faulted.

2. The method according to Claim 1 for determining the electrical insulation status of a sending end or branch in an electric network, **characterized by**

- determining which phase is faulted by the aid of measured line-to-neutral voltages and the zero-sequence voltage $\Delta \underline{U}_0 = \underline{U}_{0M} - \underline{U}_0$'

- computing the fault resistance $R_F$ of the faulted phase for each sending end from the Equation

$$R_F = \frac{\left|\underline{U}_{vF}\right| \sin \varphi_{U_{vF}}}{\left|\Delta \underline{I}_{0i}\right| \sin \varphi_{I_{0i}} + B_{0i} \left|\Delta \underline{U}_0\right|} \quad \text{wherein}$$

$\underline{U}_{vF}$ = voltage between faulted phase and ground
$\varphi_{U_{vF}}$ = phase angle between the voltage vector $\underline{U}_{vF}$ of the faulted phase and the vector $\Delta \underline{U}_0$
$\Delta I_{0i}$ = change in the sum current of sending end i as a result of a change in the zero-sequence voltage
$\varphi_{I_{0i}}$ = phase angle between vectors $\Delta I_{0i}$ and $\Delta \underline{U}_0$
$B_{0i}$ = summed line-to-ground susceptance (imaginary part of line-to-ground admittance) of all three phases at sending end i,

- interpreting as faulted the sending end whose fault resistance is smaller than a set threshold ($R_F < R_{Fk}$), and
- in the case of a fault of small fault resistance, comparing the values computed for $R_F$ at the sending ends and selecting the sending end with the smallest fault resistance as being faulted.

3. The method according to Claim 1 for determining the insulation status of an electric network sending end connected in a ring, **characterized by**

- determining which phase is faulted by the aid of measured line-to-neutral voltages and the zero-sequence voltage $\Delta \underline{U}_0 = \underline{U}_{0M} - \underline{U}_0$',
- computing the fault resistance $R_F$ of the faulted phase for each sending end from the Equation

$$R_{Fi} = \frac{|\underline{U}_{vF}| \sin \varphi_{U_{vF}}}{|\Delta \underline{I}_{0AB}| \sin \varphi_{I_{0AB}} + B_{0r} |\Delta \underline{U}_0|} \quad (5)$$

wherein

$$\Delta \underline{U}_0 = \underline{U}_{0M} - \underline{U}'_0 \quad (6)$$

$$\Delta \underline{I}_{0AB} = (\underline{I}_{0A2} + \underline{I}_{0B2}) - (\underline{I}_{0A1} + \underline{I}_{0B1}) \quad (7)$$

$$\varphi_{U_0} = \arg(\underline{U}_{0M} - \underline{U}_0'), \quad \varphi_{I_{0AB}} = \arg(\Delta \underline{I}_{0AB}) - \varphi_{U_0} \quad (8)$$

$R_{Fi}$ = fault resistance of ring-connected sending end i
$\underline{U}_0'$ = network zero-sequence voltage prior to change
$\underline{U}_{0M}$ = network zero-sequence voltage after change
$I_{0A1}$ = sum current of ring-connected sending end A prior to change in zero-sequence voltage
$I_{0B1}$ = sum current of ring-connected sending end B prior to change in zero-sequence voltage
$I_{0A2}$ = sum current of ring-connected sending end A after change in zero-sequence voltage
$I_{0B2}$ = sum current of ring-connected sending end B after change in zero-sequence voltage
$\varphi_{U_0}$ = phase angle of vector $\Delta \underline{U}_0$
$\varphi_{I0AB}$ = phase angle between vectors $\Delta I_{0AB}$ and $\Delta \underline{U}_0$
$B_{0r}$ = summed line-to-ground susceptance (sum of all three phases) of ring-connected sending end.

4.  The method according to Claim 1, 2 or 3, **characterized by** interpreting the phase as being faulted in an isolated-neutral network whose line-to-neutral voltage is ahead of the zero-sequence voltage change vector $\Delta \underline{U}_0 = \underline{U}_{0M} - \underline{U}_0'$ by approximately 90°.

5.  The method according to Claim 1, 2 or 3, **characterized by** interpreting the phase as being faulted in a resonant-ground network whose voltage angle is within a predetermined range with regard to the zero-sequence voltage change vector $\Delta \underline{U}_0$.

6.  A method according to Claim 1 for determining a faulted phase in an isolated-neutral network, comprising

    - computing the absolute value $|\Delta \underline{U}_0| = |\underline{U}_{0M} - \underline{U}_0'|$ of a change in the zero-sequence voltage in vector form in connection with a change in the state of the network,
    - determining the line-to-neutral voltages in vector form,

    **characterized by**

    - interpreting as faulted the phase whose line-to-neutral voltage is ahead of the zero-sequence voltage change vector $\Delta \underline{U}_0 = \underline{U}_{0M} - \underline{U}_0'$ by approximately 90°.

7.  A method according to Claim 1 for determining a faulted phase in a resonant-ground network, comprising

    - computing the absolute value $|\Delta \underline{U}_0| = |\underline{U}_{0M} - \underline{U}_0'|$ of a change in the zero-sequence voltage in vector form in connection with a change in the state of the network,

    **characterized by**

    - interpreting as faulted the phase whose line-to-neutral voltage angle is within a given predetermined range with regard to the zero-sequence voltage change vector $\Delta\underline{U}_0$.

**Patentansprüche**

1. Verfahren zum Ermitteln des elektrischen Isolationszustands einer Eingangsseite oder einer Verzweigung in einem elektrischen Netz, aufweisend

   - Berechnen des Absolutwerts einer Änderung der Nullsequenz-Spannung in Form eines Vektors in Zusammenhang mit einer Änderung des Zustands des Netzes, wobei $\underline{U}_0$' = die gemessene Nullsequenz-Spannung vor der Änderung und $\underline{U}_{0M}$ = die gemessene Nullsequenz-Spannung nach der Änderung ist,
   - Vergleichen des berechneten Werts $|\Delta\underline{U}_0|$ mit einem vorbestimmten Schwellenwert $|\Delta\underline{U}_0|\geq U_{0k}$, und
   - wenn die Änderung der Nullsequenz-Spannung die Schwelle überschreitet, Auslösen der Ermittlung der fehlerhaften Phase,

   **gekennzeichnet durch** die Schritte des

   - Ermittelns, welche Phase fehlerhaft ist, mit Hilfe gemessener Phasenspannungen und der Nullsequenz-Spannung

$$\left|\Delta\underline{U}_0\right| = \underline{U}_{0M} - \underline{U}_0{}'$$

   - Berechnen des Fehler-Widerstands $R_F$ der fehlerhaften Phase für jede Eingangsseite anhand der Gleichung

$$R_F = \frac{\left|\underline{U}_{vF}\right|\sin\varphi_{U_{vF}}}{\left|\Delta\underline{I}_0\right|\sin\varphi_{I0} + B_0\left|\Delta\underline{U}_0\right|} , \text{ wobei}$$

   $\underline{U}_{vF}$ = Spannung zwischen der fehlerhaften Phase und der Masse
   $\varphi_{U_{vF}}$ = Phasenwinkel zwischen dem Spannungsvektor $\underline{U}_{vF}$ der fehlerhaften Phase und dem Vektor $\Delta\underline{U}_0$
   $\Delta\underline{I}_0$ = Änderung des Summenstroms der Eingangsseite, die sich aus der Änderung der Nullsequenz-Spannung ergibt
   $\varphi_{I0}$ = Phasenwinkel zwischen den Vektoren $\Delta\underline{I}_0$ und $\Delta\underline{U}_0$
   $B_{0i}$ = addierte Leitung-zu-Masse-Suszeptanz (Imaginärteil der Leitung-zu-Masse-Admittanz) der drei Phasen der Eingangsseite;

   - Interpretieren der Eingangsseite als fehlerhaft, deren Fehler-Widerstand ($R_F$) kleiner als eine gesetzte Schwelle ($R_{Fk}$) ist ($R_F < R_{Fk}$), und
   - vergleichen der berechneten Werte für $R_F$ an den Eingangsseiten und Auswählen der Eingangsseite mit dem kleinsten Fehler-Widerstand als fehlerhaft im Fall eines Fehlers mit einem kleinen Fehler-Widerstand.

2. Verfahren zum Ermitteln des elektrischen Isolationszustandes einer Eingangsseite oder einer Verzweigung in einem elektrischen Netz nach Anspruch 1 , **gekennzeichnet durch**

   - Ermitteln, welche Phase fehlerhaft ist, mittels der gemessenen Phasenspannungen und der Nullsequenz-Spannung

$$\Delta\underline{U}_0 = \underline{U}_{0M} - \underline{U}_0{}'$$

   - Berechnen des Fehler-Widerstandes $R_F$ der fehlerhaften Phase für jede Eingangsseite anhand der Gleichung

$$R_F = \frac{\left|\underline{U}_{vF}\right|\sin\varphi_{U_{vF}}}{\left|\Delta\underline{I}_{0i}\right|\sin\varphi_{I0i} + B_{0i}\left|\Delta\underline{U}_0\right|}$$

wobei

$\underline{U}_{vF}$ = Spannung zwischen der fehlerhaften Phase und der Masse

$\varphi_{U_{vF}}$ = Phasenwinkel zwischen dem Spannungsvektor $\underline{U}_{vF}$ der fehlerhaften Phase und dem Vektor $\Delta\underline{U}_0$

$\Delta I_{0i}$ = Änderung des Summenstroms der Eingangsseite i infolge einer Änderung der Nullsequenz-Spannung

$\varphi_{I_{0i}}$ = Phasenwinkel zwischen den Vektoren $\Delta\underline{I}_{0i}$ und $\Delta\underline{U}_0$

$B_{0i}$ = addierte Leitung-zu-Masse-Suszeptanz (Imaginärteil der Leitung-zu-Masse-Admittanz) aller drei Phasen an der Eingangsseite i,

- Interpretieren der Eingangsseite als fehlerhaft, deren Fehler-Widerstand kleiner als eine festgesetzte Schwelle ist ($R_F < R_{FK}$), und

- im Fall einer Störung mit kleinem Fehler-Widerstand, Vergleichen der berechneten Werte für $R_F$ an den Eingangsseiten und Auswählen der Eingangsseiten mit dem kleinsten Fehler-Widerstand als fehlerhaft.

**3.** Verfahren zum Ermitteln des Isolationszustandes einer Eingangsseite eines elektrischen Netzes, das als Ring geschaltet ist, nach Anspruch 1, **gekennzeichnet durch**

- Ermitteln, welche Phase fehlerhaft ist, mit Hilfe von gemessenen Phasanspannungen und der Nullsequenz-Spannung

$$\Delta\underline{U}_0 = \underline{U}_{0M} - \underline{U}_0'$$

- Berechnen des Fehler-Widerstands $R_F$ der fehlerhaften Phase für jede Eingangsseite anhand der Gleichung

$$R_{Fi} = \frac{\left|\underline{U}_{vF}\right|\sin\varphi_{U_{vF}}}{\left|\Delta\underline{I}_{0AB}\right|\sin\varphi_{I0AB} + B_{0r}\left|\Delta\underline{U}_0\right|}$$

wobei

$$\Delta\underline{U}_0 = \underline{U}_{0M} - \underline{U}_0'$$

$$\Delta\underline{I}_{0AB} = \left(\underline{I}_{0A2} + \underline{I}_{0B2}\right) - \left(\underline{I}_{0A1} + \underline{I}_{0B1}\right)$$

$$\varphi_{U_0} = \arg\left(\underline{U}_{0M} - \underline{U}_0'\right), \quad \varphi_{I_{0AB}} = \arg\left(\Delta\underline{I}_{0AB}\right) - \varphi_{U_0}$$

$R_{Fi}$ = Fehler-Widerstand der ringgeschalteten Eingangsseite i

$\underline{U}_0'$ = Nullsequenz-Spannung des Netzes vor der Änderung

$\underline{U}_{0M}$ = Nullsequenz-Spannung des Netzes nach der Änderung

$I_{0A1}$ = Summenstrom der ringgeschalteten Eingangsseite A vor der Änderung der Nullsequenz-Spannung

$I_{0B1}$ = Summenstrom der ringgeschalteten Eingangsseite B vor der Änderung der Nullsequenz-Spannung

$I_{0A2}$ = Summenstrom der ringgeschalteten Eingangsseite A nach der Änderung der Nullsequenz-Spannung

$I_{0B2}$ = summenstrom der ringgeschalteten Eingangsseite B nach der Änderung der Nullsequenz-Spannung

$\varphi_{U_0}$ = Phasenwinkel des Vektors $\Delta\underline{U}_0$

$\varphi_{I_{0AB}}$ = Phasenwinkel zwischen den Vektoren $\Delta I_{0AB}$ und $\Delta\underline{U}_0$

$B_{0r}$ = addierte Leitung-zu-Masse-Suszeptanz (Summe aller drei Phasen) der ringgeschalteten Eingangsseite.

**4.** Verfahren nach Anspruch 1, 2 oder 3, **gekennzeichnet durch** Interpretieren der Phase in einem Netz mit isoliertem Sternpunkt als fehlerhaft, deren Phasenspannung dem Nullsequenz-Spannungsänderungsvektor $\Delta\underline{U}_0=\underline{U}_{0M}\text{-}\underline{U}_0$' um ungefähr 90˚ voraus ist.

**5.** Verfahren nach Anspruch 1, 2 oder 3, **gekennzeichnet durch** Interpretieren der Phase in einem Netz mit Resonanz-Sternpunkterdung als fehlerhaft, deren Spannungswinkel sich innerhalb eines vorbestimmten Bereichs bezüglich des Nullsequenz-Spannungsänderungsvektors $\Delta\underline{U}_0$ befindet.

**6.** Verfahren zum Ermitteln einer fehlerhaften Phase in einem Netz mit isoliertem Neutralleiter nach Anspruch 1, aufweisend

- Berechnen des Absolutwerts $|\Delta\underline{U}_0|=|\underline{U}_{0M}\text{-}\underline{U}_0'|$ einer Änderung der Nullsequenz-Spannung in Vektorform in Zusammenhang mit einer Änderung des Zustandes des Netzes,
- Ermitteln der Phasenspannungen in Vektorform,

**gekennzeichnet durch**

- Interpretieren der Phase als fehlerhaft, deren Phasenspannung dem Nullsequenz-Spannungsänderungsvektor $\Delta\underline{U}_0=\underline{U}_{0M}\text{-}\underline{U}_0'$ um etwa 90˚ voraus ist.

**7.** Verfahren zum Ermitteln einer fehlerhaften Phase in einem Resonanz-Masse-Netz nach Anspruch 1, aufweisend

- Berechnen des Absolutwerts $|\Delta\underline{U}_0|=|\underline{U}_{0M}\text{-}\underline{U}_0'|$ einer Änderung der Nullsequenz-Spannung in Vektorform in zusammenhang mit einer Änderung des Zustands des Netzes,

**gekennzeichnet durch**

- Interpretieren der Phase als fehlerhaft, deren Phasenspannungswinkel innerhalb eines vorbestimmten Bereichs bezüglich des Nullsequenz-Spannungsänderungsvektors $\Delta\underline{U}_0$ ist.

**Revendications**

**1.** Procédé pour déterminer l'état d'isolation électrique d'une branche ou d'une extrémité émettrice dans un réseau électrique, comprenant :

le calcul de la valeur absolue d'un changement dans la tension homopolaire sous la forme d'un vecteur lié à un changement dans l'état du réseau, moyennant quoi $\underline{U}_0'$ = la tension homopolaire mesurée avant le changement, et $\underline{U}_{0M}$ = la tension homopolaire mesurée après le changement,
la comparaison de la valeur calculée $|\Delta\underline{U}_0|$ à une valeur seuil prédéterminée $|\Delta\underline{U}_0| \geq U_{0k}$, et
si le changement dans la tension homopolaire dépasse le seuil, initier la détermination de la phase en défaut, **caractérisé par** les étapes suivantes :

déterminer quelle phase est en défaut à l'aide de tensions de phase mesurées et de la tension homopolaire

$$\Delta\underline{U}_0 = \underline{U}_{0M} - \underline{U}_0',$$

calculer la résistance de défaut $R_F$ de la phase en défaut pour chaque extrémité émettrice à partir de l'équation :

$$R_F = \frac{\left|\underline{U}_{vF}\right|\sin\varphi_{U_{vF}}}{\left|\Delta\underline{I}_0\right|\sin\varphi_{I_0} + B_0\left|\Delta\underline{U}_0\right|}$$

dans laquelle

$\underline{U}_{vF}$ = tension entre la phase en défaut et la terre,

$\phi_{UvF}$ = angle de phase entre le vecteur de tension $\underline{U}_{vF}$ de la phase en défaut et le vecteur $\Delta\underline{U}_0$,

$\Delta\underline{I}_0$ = changement dans le courant somme de l'extrémité émettrice résultant d'un changement dans la tension homopolaire,

$\phi_{I0}$ = angle de phase entre les vecteurs $\Delta\underline{I}_0$ et $\Delta\underline{U}_0$,

$B_0$ = susceptance phase-terre somme (partie imaginaire de l'admittance phase-terre) des trois phases de l'extrémité d'émission,

interpréter comme étant en défaut l'extrémité émettrice dont la résistance de défaut ($R_F$) est plus petite ($R_F < R_{Fk}$) qu'un seuil défini ($R_{Fk}$), et

dans le cas d'un défaut d'une petite résistance de défaut, comparer les valeurs calculées pour $R_F$ au niveau des extrémités émettrices et sélectionner l'extrémité émettrice avec la plus petite résistance de défaut comme étant en faute.

2. Procédé selon la revendication 1 pour déterminer l'état d'isolation électrique d'une branche ou d'une extrémité émettrice dans un réseau électrique, **caractérisé par** :

déterminer quelle phase est en défaut à l'aide de tensions de phase mesurées et de la tension homopolaire

$$\Delta\underline{U}_0 = \underline{U}_{0M} - \underline{U}_0{}',$$

calculer la résistance de défaut $R_F$ de la phase en défaut pour chaque extrémité émettrice à partir de l'équation :

$$R_F = \frac{|\underline{U}_{vF}|\sin\varphi_{U_{vF}}}{|\Delta\underline{I}_{0i}|\sin\varphi_{I_{0i}} + B_{0i}|\Delta\underline{U}_0|}$$

dans laquelle

$\underline{U}_{vF}$ = tension entre la phase en défaut et la terre,

$\phi_{UvF}$ = angle de phase entre le vecteur de tension $\underline{U}_{vF}$ de la phase en défaut et le vecteur $\Delta\underline{U}_0$,

$\Delta\underline{I}_{0i}$ = changement dans le courant somme de l'extrémité émettrice i résultant d'un changement dans la tension homopolaire,

$\phi_{I0i}$ = angle de phase entre les vecteurs $\Delta\underline{I}_{0i}$ et $\Delta\underline{U}_0$,

$B_{0i}$ = susceptance phase-terre somme (partie imaginaire de l'admittance phase-terre) des trois phases de l'extrémité d'émission i,

interpréter comme étant en défaut l'extrémité émettrice dont la résistance de défaut ($R_F$) est plus petite qu'un seuil défini ($R_F < R_{Fk}$), et

dans le cas d'un défaut d'une petite résistance de défaut, comparer les valeurs calculées pour $R_F$ au niveau des extrémités émettrices et sélectionner l'extrémité émettrice avec la plus petite résistance de défaut comme étant en faute.

3. Procédé selon la revendication 1 pour déterminer l'état d'isolation d'une extrémité émettrice d'un réseau électrique connectée en anneau, **caractérisé par** :

déterminer quelle phase est en défaut à l'aide de tensions de phase mesurées et de la tension homopolaire $\Delta\underline{U}_0 = \underline{U}_{0M} - \underline{U}_0{}'$,

calculer la résistance de défaut $R_F$ de la phase en défaut pour chaque extrémité émettrice à partir de l'équation :

$$R_{Fi} = \frac{|\underline{U}_{vF}|\sin\varphi_{U_{vF}}}{|\Delta\underline{I}_{0AB}|\sin\varphi_{I_{0AB}} + \hat{B}_{0r}|\Delta\underline{U}_0|} \qquad (5)$$

dans laquelle

$$\Delta \underline{U}_0 = \underline{U}_{0M} - \underline{U}_0', \qquad\qquad (6)$$

$$\Delta \underline{I}_{0AB} = (\underline{I}_{0A2} + \underline{I}_{0B2}) - (\underline{I}_{0A1} + \underline{I}_{0B1}), \qquad\qquad (7)$$

$$\phi_{U0} = \arg(\underline{U}_{0M} - \underline{U}_0'), \quad \phi_{I0AB} = \arg(\Delta \underline{I}_{0AB}) - \phi_{U0}, \qquad (8)$$

$R_{Fi}$ = résistance de défaut de l'extrémité émettrice i connectée en anneau,

$\underline{U}_0'$ = tension homopolaire du réseau avant le changement,

$\underline{U}_{0M}$ = tension homopolaire du réseau après le changement,

$\underline{I}_{0A1}$ = courant somme de l'extrémité émettrice connectée en anneau A avant le changement de la tension homopolaire,

$\underline{I}_{0B1}$ = courant somme de l'extrémité émettrice connectée en anneau B avant le changement de la tension homopolaire

$\underline{I}_{0A2}$ = courant somme de l'extrémité émettrice connectée en anneau A après le changement de la tension homopolaire

$\underline{I}_{0B2}$ = courant somme de l'extrémité émettrice connectée en anneau B après le changement de la tension homopolaire

$\phi_{U0}$ = angle de phase du vecteur $\Delta U_0$,

$\phi_{I0AB}$ = angle de phase entre les vecteurs $\Delta I_{0AB}$ et $\Delta \underline{U}_0$,

$B_{0r}$ = susceptance phase-terre somme (somme des trois phases) de l'extrémité d'émission connectée en anneau.

4. Procédé selon les revendications 1, 2 ou 3, **caractérisé en ce que** l'interprétation de la phase comme étant en défaut dans un réseau à neutre isolé dont la tension de phase est en avance par rapport au vecteur de changement de tension homopolaire $\Delta \underline{U}_0 = \underline{U}_{0M} - \underline{U}_0'$ d'approximativement 90˚.

5. Procédé selon les revendications 1, 2 ou 3, **caractérisé par** l'interprétation de la phase comme étant en défaut dans un réseau à terre résonante dont l'angle de tension est situé dans une plage prédéterminée par rapport au vecteur de changement de tension homopolaire $\Delta \underline{U}_0$.

6. Procédé selon la revendication 1 pour déterminer une phase en défaut dans un réseau à neutre isolé, comprenant :

le calcul de la valeur absolue $|\Delta \underline{U}_0| = |\underline{U}_{0M} - \underline{U}_0'|$ d'un changement dans la tension homopolaire sous la forme d'un vecteur en relation avec un changement de l'état du réseau,
la détermination des tensions de phase sous la forme d'un vecteur,
**caractérisé en ce que** :

l'interprétation comme étant en défaut de la phase dont la tension de phase est en avance par rapport au vecteur de changement de tension homopolaire $\Delta \underline{U}_0 = \underline{U}_{0M} - \underline{U}_0'$ d'approximativement 90˚.

7. Procédé selon la revendication 1 pour déterminer une phase en défaut dans un réseau à terre résonante, comprenant :

le calcul de la valeur absolue $|\Delta \underline{U}_0| = |\underline{U}_{0M} - \underline{U}_0'|$ d'un changement dans la tension homopolaire sous la forme d'un vecteur en relation avec un changement de l'état du réseau,
**caractérisé en ce que** :

l'interprétation comme étant en faute de la phase dont l'angle de tension de phase est situé dans une plage prédéterminée par rapport au vecteur de changement de tension homopolaire $\Delta \underline{U}_0$.

Fig. 1

EP 1 139 539 B1

Fig. 2

EP 1 139 539 B1

20 kV radial and ring-connected sending ends

Main transformer

110/20 kV

110 kV network

Arc-suppression reactor

Sending end A

Sending end B

$I_{0A}$

$I_{0B}$

$U_0$

1

2

3

Branch

Faulted ring

4

Branch

## Fig. 3